# EUROPEAN PATENT SPECIFICATION

(11) **EP 2 623 823 B1**
(45) Date of publication and mention of the grant of the patent: **17.05.2017**
(21) Application number: 12153220.4
(22) Date of filing: 31.01.2012
(51) Int. Cl.: F16K 1/52, F16K 31/50, F24D 19/10, F16K 1/10, G01F 1/36, G01F 15/00, G05D 7/06

(54) **Control valve for hydronic installations, system and method for measuring a flow rate through such a control valve**
Steuerventil für hydronische Installationen, System und Verfahren zum Messen einer Durchflussrate durch solch ein Steuerventil
Vanne de contrôle pour installations hydroniques, système et procédé de mesure du débit passant par une telle vanne de contrôle

(43) Date of publication of application: 07.08.2013
(73) Proprietor: Honeywell Technologies Sarl, 1180 Rolle (CH)
(72) Inventor: Svejnoha, Petr, 68201 Vyskov (CZ); Hilborne-Clarke, Axel, 59821 Arnsberg (DE); Borastero, Ivan, 68301 Rousinov, Vyskov (CZ)
(74) Representative: Sturm, Christoph

(56) References cited:
- EP-A1- 2 375 113
- WO-A1-2006/031161
- WO-A1-2009/132658
- DE-U1- 8 909 284

## Description

The present application relates to a system for measuring a flow rate of a hydronic medium through such a control valve for hydronic installations and to a method for measuring a flow rate of a hydronic medium through such a control valve for hydronic installations.

In hydronic heating or cooling installations, for example in two-pipe heating systems, a hydronic medium tempered by a heat exchanger, for example by a heating boiler, is provided to heating or cooling devices, for example to heating radiators, through at least one supply pipe, wherein the hydronic medium is returned back from the heating or cooling devices to the heat exchanger by at least one return pipe. It is necessary to provide a defined flow within the heating or cooling installation and to provide a defined pressure differential between the supply pipe and the return pipe. This is a significant requirement for an efficient operation of a hydronic heating or cooling installation.

In order to provide a defined flow within the heating or cooling installation, a so-called double regulating balancing valve (DRV valve) is used and installed e.g. in the supply pipe of the hydronic installations. In order to provide a defined pressure differential between the supply pipe and the return pipe of the heating or cooling installation, a so-called differential pressure control valve (DPC valve) is used and installed between the supply pipe and the return pipe of the hydronic installation. The double regulating balancing valve and the differential pressure control valve are both control valves of the hydronic installation. The present invention relates to such hydronic control valves, especially to a double regulating balancing valve.

EP 2 375 113 A1 discloses a control valve for hydronic installations, namely a double regulating balancing valve. The control valve comprises a valve housing and a valve plunger. The valve housing provides a valve inlet, a valve outlet and a valve seat. The valve plunger is acting together with the valve seat provided by the valve housing, wherein the control valve is closed when the valve plunger is pressed against the valve seat, and wherein the control valve is opened when the valve plunger is lifted up from the valve seat. The control valve further comprises pressure test valves being assigned to the valve housing for measuring the pressure within the valve inlet and/or for measuring the pressure within the valve outlet of the valve housing. Usually, a control valve for hydronic installations comprises two pressure test valves, namely a first pressure test valve assigned to the valve inlet for measuring the pressure within the valve inlet and a second pressure test valve assigned to the valve outlet for measuring the pressure within the valve outlet. Further on, the control valve known from EP 2 375 113 A1 comprises a turnable or rotatable hand wheel for adjusting manually the relative position of the valve plunger relative to the valve seat by turning or rotating the hand wheel. The hand wheel is rotatable relative to a static part of the valve housing and acts together with a gear. After each full rotation of the hand wheel the gear is rotated by one incremental step. A scale assigned to the gear is visible by the operator through an opening thereby proving information of the full rotations performed by the hand wheel and thereby about the relative position between the valve plunger and the valve seat.

The flow rate of a hydronic medium through such a control valve can be determined by an operator on basis of the pressure difference between the pressure within the valve inlet and the pressure within the valve outlet and on basis of the number of full rotations performed by the hand wheel. The operator has to determine the pressure difference from the signals provided by the pressure test valves and has to determine the full rotations performed by the hand wheel from the scale assigned to the gear. Based on this data the operator can determine the flow rate through the control valve using a datasheet of the same. This way of determining the flow rate of a hydronic medium through the control valve is inaccurate because of mechanical tolerances between the hand wheel and the gear. Further on, this way of determining the flow rate of a hydronic medium through the control valve is prone to calculation errors of the operator because the operator has to determine the flow rate on his own by determining the pressure difference, by determining the full rotations performed by the hand wheel and by utilizing the datasheet of the control valve based on this data.

Against this background, a novel system for measuring a flow rate of a hydronic medium through such a control valve and a novel method for measuring a flow rate of a hydronic medium through such a control valve are provided allowing a more accurate and fail-safe determination of the flow rate.

The novel system for measuring a flow rate of a hydronic medium through such a control valve is defined in the claim 1.

Mechanical tolerances between the hand wheel and the gear do not affect the accuracy of the determination of the flow rate. Further on, it is not necessary to utilize a datasheet of the control valve to determine the flow rate. This invention provides an automatic, accurate and fail-safe way to determine the flow rate of a hydronic medium through the control valve.

The novel method for measuring a flow rate of a hydronic medium through such a control valve for hydronic installations is defined in the claim 9.

Preferred developments of the invention are provided by the dependent claims and the description which follows. Exemplary embodiments are explained in more detail on the basis of the drawing, in which:
- Figure 1: shows a perspective view of a control valve for hydronic installations;
- Figure 2: shows a cross sectional view through the control valve for hydronic installations of Figure 1 in a closed status of the control valve;
- Figure 3: shows a cross sectional view through the control valve for hydronic installations of Figure 1 in an opened status of the control valve;
- Figure 4: shows the control valve of Figure 2 as part of a measuring system; and
- Figure 5: shows the control valve of Figure 3 as part of the measuring system.

The present invention relates to a control valve 10 for hydronic heating or cooling installations, especially to a double regulating balancing valve.

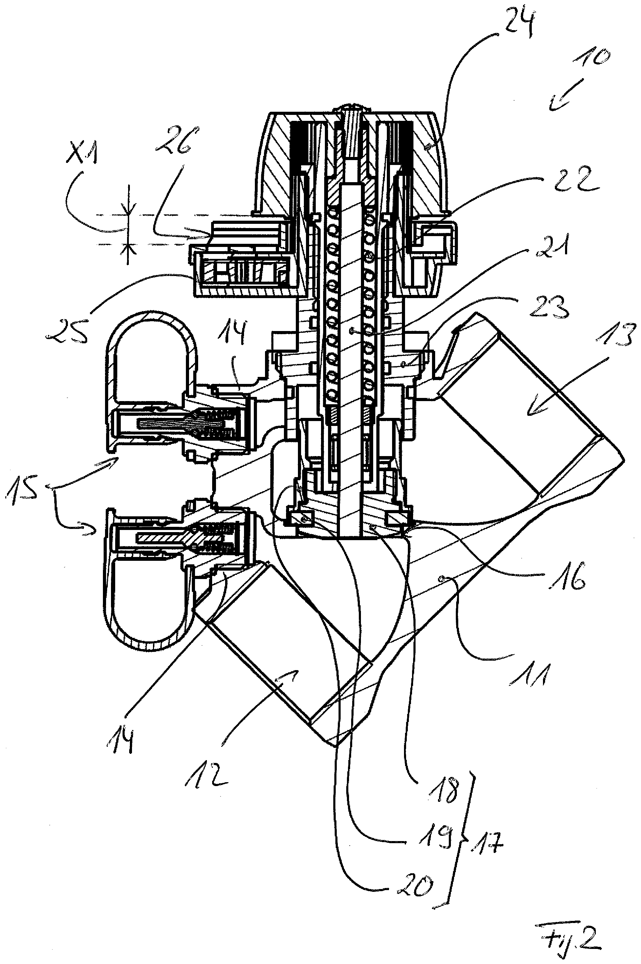

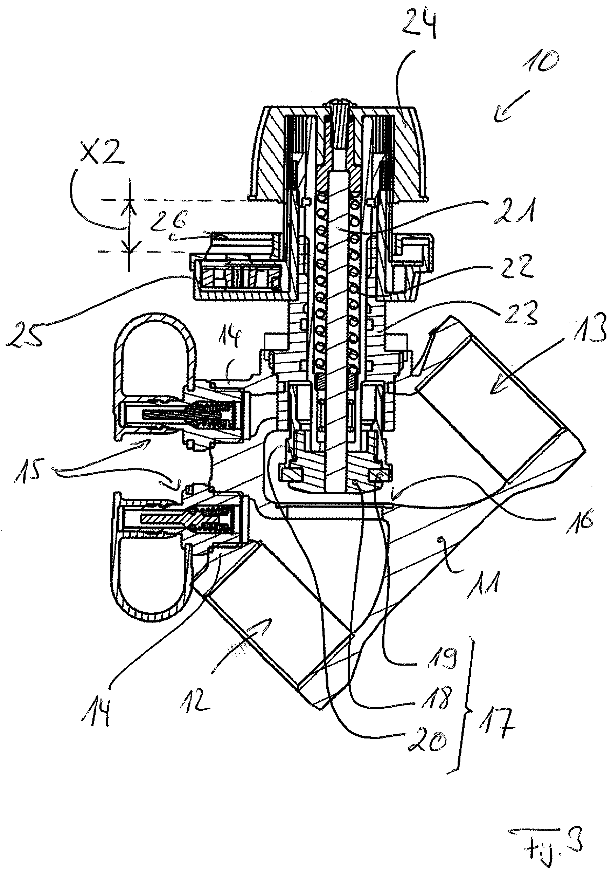

Figures 2 and 3 each show a cross section through such a control valve 10, namely through a double regulating balancing valve. The principle functionality of such a differential pressure control valve or a double regulating balancing valve is known to the person skilled in the art.

The control valve 10 comprises a valve housing 11. The valve housing 11 comprises a valve inlet 12, a valve outlet 13 and connection terminals 14 for pressure test valves 15. The valve inlet 12 and valve outlet 13 of the valve housing 11 are connectable into at least one pipe of a hydronic installation.

The valve housing 11 provides a valve seat 16. A valve plunger 17, which is part of a valve insert, acts together with the valve seat 16. The control valve 10 is closed (see Figure 2) when the valve plunger 17 is pressed against the valve seat 16. The control valve 10 is opened (see Figure 3) when the valve plunger 17 is lifted up from the valve seat 16.

As mentioned above, pressure test valves 15 are assigned to the control valve 10. A first pressure test valve 15 is assigned to the valve inlet 12 for measuring the pressure within the valve inlet 12 and a second pressure test valve 15 is assigned to the valve outlet 13 for measuring the pressure within the valve outlet 13. The pressure test valves 15 are inserted in the connection terminals 14 of the valve housing 11 of the control valve 10.

The valve plunger 17, which is part of the valve insert, comprises a plunger body 18 carrying a sealing element 19 and a plunger housing 20 receiving the plunger body 18 and the sealing element 19. When the control valve 10 is closed the sealing element 19 of the valve plunger 17 is pressed against the valve seat 16. The sealing element 19 is provided by an O-ring.

The valve plunger 17 is attached to a first end of a valve stem 21. The valve stem 21 is also part of the valve insert. A spring element 22 is positioned around the valve stem 21, namely within an insert body 23 of the valve insert of the control valve 10. A spring force provided by the spring element 22 acts in such a way on the valve stem 21 to which the valve plunger 17 is attached that the spring force provided by the spring element 22 tends to lift up the valve plunger 17 from the valve seat 16 and thereby tends to open the control valve 10.

The control valve 10 comprises a hand wheel 24. The hand wheel 24 provides a regulating function of the control valve 10 in such a way that by operating, namely by rotating or turning, the hand wheel 24 a movement the valve plunger 17 is caused. By rotating the hand wheel 24 the compression of the spring element 22 can be changed and thereby the axial position of the valve stem 21 and of the valve plunger 17 relative to the valve seat 16.

When the hand wheel 24 is rotated in a first direction, the compression of the spring element 22 is increased thereby moving the valve stem 21 and valve plunger 17 in the closing direction of the control valve 10. When the hand wheel 24 is rotated in a second, opposite direction, the compression of the spring element 22 is decreased thereby moving the valve stem 21 and valve plunger 17 in the opening direction of the control valve 10.

When the hand wheel 24 becomes operated, namely rotated or turned, in order to adjust the flow rate through the control valve 10, the hand wheel 24 changes its axial distance X relative to a static part 25 of the control valve 10, namely a static part 25 attached to the valve housing 11 of the control valve.

The valve plunger 17, the valve stem 21, the spring element 22, the insert body 23, the hand wheel 24 and the static part 25 are all part of the valve insert. In other words, the valve insert comprises the valve plunger 17, the valve stem 21, the spring element 22, the insert body 23, the hand wheel 24 and the static part 25.

Figure 2 illustrates the axial distance X1 between the hand wheel 24 and the static part 25 of the control valve 10, namely between a lower surface of the hand wheel 24 and an upper surface of the static part 25, when the control valve 10 is completely closed.

Figure 3 illustrates the axial distance X2 between the hand wheel 24 and the static part 25 of the control valve 10, namely between the lower surface of the hand wheel 24 and the upper surface of the static part 25, when the control valve 10 is fully opened.

When the hand wheel 24 becomes rotated in the first direction, namely in the closing direction, the axial distance X is decreasing. When the hand wheel 24 is rotated in the second, opposite direction, the axial distance X is increasing.

The static part 25 of the control valve 10 comprises a section 26 for receiving a sensor 27. The sensor 27 is adapted to measure the axial distance X between the hand wheel 24 and the static part 25 of the control valve 10 and thereby the relative position of the valve plunger 17 relative to the valve seat 16.

The sensor 27 automatically measures the axial distance X between the hand wheel 24 and the static part 25 of the control valve 10. The sensor 27 can e.g. use a potentiometric method or an electromagnetic method to measure the axial distance X between the hand wheel 24 and the static part 25. The sensor 27 enables a dynamic measurement of the axial distance X between the hand wheel 24 and the static part 25. The sensor 27 adapted to measure the axial distance X between the hand wheel 24 and the static part 25 of the control valve is preferably a Hall sensor.

The control valve 10 further comprises data means 28 adapted to provide a kᵥ-value of the control valve 10 for each relative position of the valve plunger 17 relative to the valve seat 16 so that a flow rate of the hydronic medium through the control valve 10 can be automatically determined from a pressure difference between the pressure within the valve inlet 12 and the pressure within valve outlet 13 provided by the pressure test valves 15, from the relative position of the valve plunger 17 relative to the valve seat 16 provided by the sensor 27 and from the respective kᵥ-value corresponding the relative position of the valve plunger 17 relative to the valve seat 16.

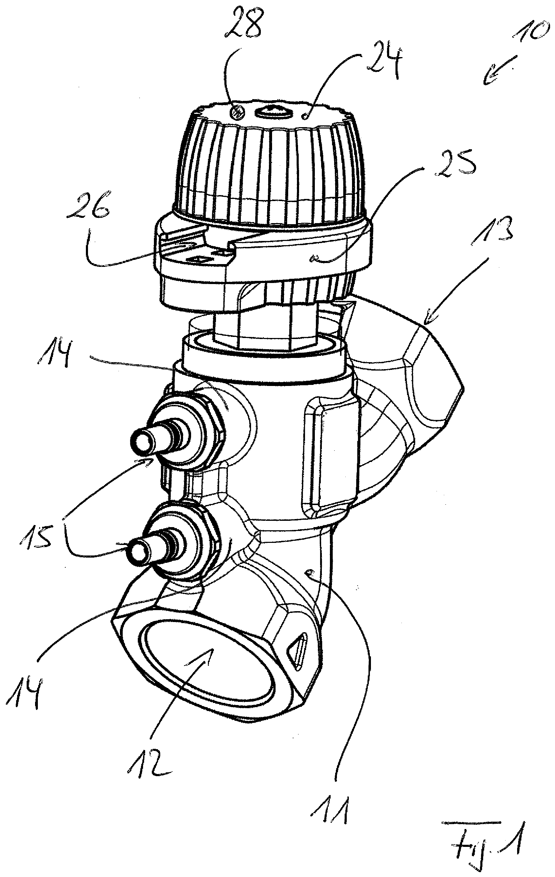

The data means 28 adapted to provide a kᵥ-value of the control valve 10 for each relative position of the valve plunger 17 relative to the valve seat can be provided by a barcode printed on or attached to the valve insert or to the valve housing 10. The data means 28 is preferably printed on or attached to the upper surface of the hand wheel 24 (see Figure 1).

Alternatively, the data means 28 adapted to provide a kᵥ-value of the control valve 10 for each relative position of the valve plunger 17 relative to the valve seat 16 can be provided by RFID tag attached to the valve insert or the valve housing 10 or by a string of numbers and/or characters printed on the valve insert or on the valve housing 10.

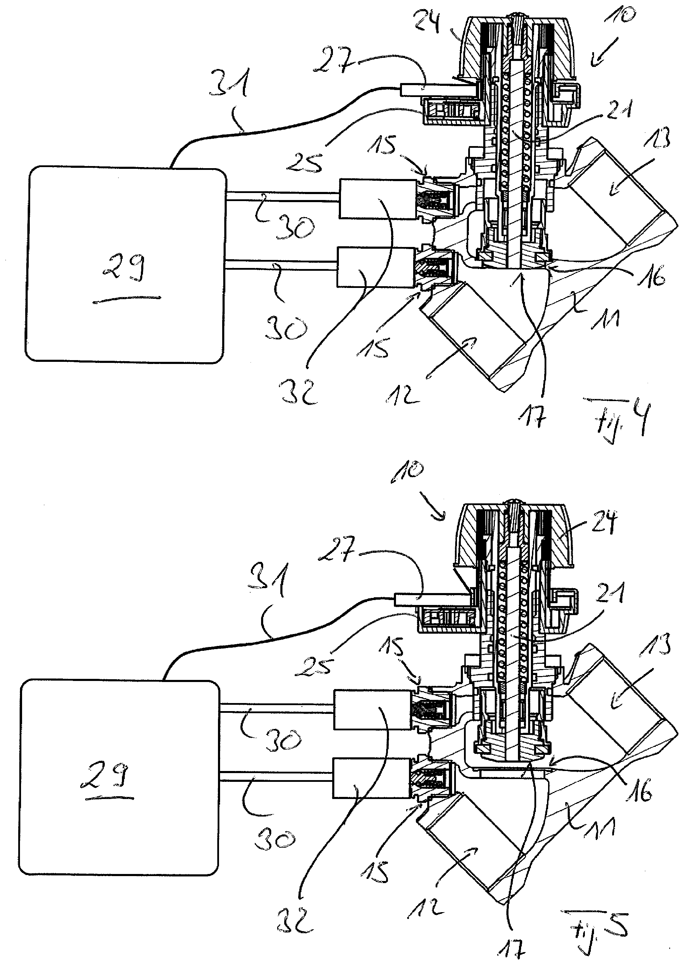

Figures 4 and 5 each show the control valve 10 as part of a system for measuring the flow rate of the hydronic medium through the control valve 10. The system comprises the control valve 10 and a measuring device 29. The measuring device 29 is connected to the pressure test valves 15 of the control valve 10 preferably by hoses 30 and adapters 32.

The measuring device 29 automatically determines the pressure difference between the pressure within the valve inlet 12 and the pressure within valve outlet. The measuring device 29 is connected to the sensor 27 by a further data cable 31. The sensor 27 automatically measures the axial distance X between the hand wheel 24 and the static part 25 of the control valve 10 and thereby the relative position of the valve plunger 17 relative to the valve seat 16. The measuring device 29 is adapted to determine the kᵥ-value of the control valve 10 for each relative position of the valve plunger 17 relative to the valve seat 16 on basis of the data provided by the data means 28 of the control valve 10.

Based on this information, namely based on pressure difference and on the relative position of the valve plunger 17 relative to the valve seat 16 and on the corresponding kᵥ-value, the measuring device 29 determines automatically the flow rate of the hydronic medium through the control valve 10.

If the data means 28 of the control valve 10 is provided by a barcode or by a string of numbers and/or characters attached to or printed on the valve insert or alternatively on the valve housing 10, the measuring device 29 is adapted to read or to receive the barcode or the string of numbers and/or characters. The measuring device 29 then determines on basis of the barcode or on basis of the string of numbers and/or characters the respective kᵥ-value based on data stored in the measuring device 29.

If the data means 28 of the control valve 10 is provided by a RFID tag, the measuring device 29 is adapted to read or to receive the data stored in the RFID tag. The measuring device 29 then determines on basis of the data stored in the RFID tag and/or on basis of the data stored in the measuring device 29 the kᵥ-value corresponding to the actual relative position of the valve plunger 17 relative to the valve seat 16.

The present application relates further to a method for measuring a flow rate of a hydronic medium through a control valve 10 for hydronic installations.

The method comprises the step of providing a control valve 10 as described above.

During manufacturing of the control valve 10 the same become calibrated. The flow characteristics, namely the kᵥ-values, of the control valve 10 for each relative position of the valve plunger 17 relative to the valve seat 16 as well as the distance X1 between the hand wheel 24 and the static part 25 for a completely closed control valve 10 are determined during calibration.

This calibration data becomes stored in the data means 28 of the control valve 10, e.g. in a RFID tag of the control valve 10. Alternatively, a data means 28 like a barcode corresponding to the calibration data becomes attached to the control valve 10 and the calibration data becomes stored in the measuring device 29 together with a relationship between the calibration data and e.g. the barcode attached or printed to the control valve 10.

The method further comprises the step of providing a measuring device 29 and of connecting the pressure test valves 15 of the control valve 10 and the sensor 27 to the measuring device 29. Further on, the data provided by data means 28 of the control valve 10 are read or received by the measuring device 29.

The method further comprises the step of automatically determining the flow rate of the hydronic medium through the control valve 10. The measuring device 29 automatically determines the flow rate from the pressure difference between the pressure within the valve inlet 12 and the pressure within the valve outlet 13 provided by the pressure test valves 15, from the relative position of the valve plunger 17 relative to the valve seat 16 provided by the sensor 27 and from the respective kᵥ-value corresponding the actual, measured relative position of the valve plunger 17 relative to the valve seat 16.

### List of reference signs

- 10: control valve
- 11: valve housing
- 12: valve inlet
- 13: valve outlet
- 14: connection terminal
- 15: pressure test valve
- 16: valve seat
- 17: valve plunger
- 18: plunger body
- 19: sealing element
- 20: plunger housing
- 21: valve stem
- 22: spring element
- 23: insert body
- 24: hand wheel
- 25: static part
- 26: section
- 27: sensor
- 28: data means
- 29: measuring device
- 30: hoses
- 31: data cable
- 32: adapter

## Claims

1. System for measuring a flow rate of a hydronic medium through a control valve for hydronic installations, comprising:
a control valve (10) for hydronic installations, the control valve (10) comprising:
a valve housing (11) providing a valve inlet (12), a valve outlet (13) and a valve seat (16), the valve inlet (12) and the valve outlet (13) being connectable into at least one pipe of the hydronic installation;
a valve plunger (17) acting together with the valve seat (16), wherein the control valve is closed when the valve plunger (17) is pressed against the valve seat (16), and wherein the control valve is opened when the valve plunger (17) is lifted up from the valve seat (16);
a hand wheel (24) for adjusting manually the relative position of the valve plunger (17) relative to the valve seat (16) by turning or rotating the hand wheel (24), wherein the hand wheel (24) changes its distance relative to a static part (25) of the control valve when the hand wheel (24) becomes turned;
pressure test valves (15) being assigned to the valve housing (11) for measuring the pressure within the valve inlet (12) and for measuring the pressure within the valve outlet (13) of the valve housing (11), wherein the pressure test valves (15) are connected with the valve housing (11) through connection terminals (14);
wherein the static part (25) of the control valve comprises a section (26) for receiving a sensor (27) adapted to measure the distance between the hand wheel (24) and the static part (25) of the control valve and thereby the relative position of the valve plunger (17) relative to the valve seat (16);
wherein the control valve comprises data means (28) adapted to provide a kᵥ-value of the control valve for each relative position of the valve plunger (17) relative to the valve seat (16) so that a flow rate of a hydronic medium through the control valve can be automatically determined from a pressure difference between the pressure within the valve inlet (12) and the pressure within the valve outlet (13) provided by the pressure test valves (15), from the relative position of the valve plunger (17) relative to the valve seat (16) provided by the sensor (27) and from the respective kᵥ-value corresponding the relative position of the valve plunger (17) relative to the valve seat (16);
a measuring device (29) being connectable to the pressure test valves (15) of the control valve (10) and to the sensor (27) adapted to measure the distance between the hand wheel (24) and the static part (25) of the control valve (10), wherein the measurement device (29) automatically determines the flow rate of the hydronic medium from the pressure difference between the pressure within the valve inlet (12) and the pressure within the valve outlet (13) provided by the pressure test valves (15), from the relative position of the valve plunger (17) relative to the valve seat (16) provided by the sensor (27) and from the respective kᵥ-value corresponding the relative position of the valve plunger (17) relative to the valve seat (16).

2. System as claimed in claim 1, **characterized in that** the measuring device (29) is adapted to read or receive data provided by data means (28) of the control valve.

3. System as claimed in claim 1, **characterized in that** the measuring device (29) is adapted to determine the kᵥ-value of the control valve for each relative position of the valve plunger (17) relative to the valve seat (16) from the data provided by the data means (28) of the control valve.

4. System as claimed in one of claims 1 to 3, **characterized in that** the control valve is a double regulating balancing valve.

5. System as claimed in one of claims 1 to 4, **characterized in that** the sensor (27) adapted to measure the distance between the hand wheel (24) and the static part (25) of the control valve is a Hall sensor.

6. System as claimed in one of claims 1 to 5, **characterized in that** the data means (28) adapted to provide the kᵥ-value of the control valve for each relative position of the valve plunger (17) relative to the valve seat (16) is a barcode.

7. System as claimed in one of claims 1 to 6, **characterized in that** the data means (28) adapted to provide the kᵥ-value of the control valve for each relative position of the valve plunger (17) relative to the valve seat (16) is a RFID tag.

8. System as claimed in one of claims 1 to 7, **characterized in that** the data means (28) adapted to provide the kᵥ-value of the control valve for each relative position of the valve plunger (17) relative to the valve seat (16) is a string of numbers and/or characters printed on a valve insert or on the valve housing.

9. Method for measuring a flow rate of a hydronic medium through a control valve for hydronic installations, comprising the following steps:
providing a control valve (10) for hydronic installations, the control valve (10) comprising:
a valve housing (11) providing a valve inlet (12), a valve outlet (13) and a valve seat (16), the valve inlet (12) and the valve outlet (13) being connectable into at least one pipe of the hydronic installation;
a valve plunger (17) acting together with the valve seat (16), wherein the control valve is closed when the valve plunger (17) is pressed against the valve seat (16), and wherein the control valve is opened when the valve plunger (17) is lifted up from the valve seat (16);
a hand wheel (24) for adjusting manually the relative position of the valve plunger (17) relative to the valve seat (16) by turning or rotating the hand wheel (24), wherein the hand wheel (24) changes its distance relative to a static part (25) of the control valve when the hand wheel (24) becomes turned;
pressure test valves (15) being assigned to the valve housing (11) for measuring the pressure within the valve inlet (12) and for measuring the pressure within the valve outlet (13) of the valve housing (11), wherein the pressure test valves (15) are connected with the valve housing (11) through connection terminals (14);
wherein the static part (25) of the control valve comprises a section (26) for receiving a sensor (27) adapted to measure the distance between the hand wheel (24) and the static part (25) of the control valve and thereby the relative position of the valve plunger (17) relative to the valve seat (16);
wherein the control valve comprises data means (28) adapted to provide a kᵥ-value of the control valve for each relative position of the valve plunger (17) relative to the valve seat (16) so that a flow rate of a hydronic medium through the control valve can be automatically determined from a pressure difference between the pressure within the valve inlet (12) and the pressure within valve outlet (13) provided by the pressure test valves (15), from the relative position of the valve plunger (17) relative to the valve seat (16) provided by the sensor (27) and from the respective kᵥ-value corresponding the relative position of the valve plunger (17) relative to the valve seat (16);
connecting the pressure test valves (15) of the control valve (10) and the sensor (27) adapted to measure the distance between the hand wheel (24) and the static part (25) of the control valve (10) to a measuring device (29);
automatically determining the flow rate of the hydronic medium from the pressure difference between the pressure within the valve inlet (12) and the pressure within the valve outlet (13) provided by the pressure test valves (15), from the relative position of the valve plunger (17) relative to the valve seat (16) provided by the sensor (27) and from the respective kᵥ-value corresponding the relative position of the valve plunger (17) relative to the valve seat (16).

## Patentansprüche

1. System zum Messen einer Durchflussrate eines hydronischen Mediums durch ein Steuerventil für Hydronikanlagen, umfassend:
ein Steuerventil (10) für Hydronikanlagen, wobei das Steuerventil (10) umfasst:
ein Ventilgehäuse (11), das einen Ventileinlass (12), einen Ventilauslass (13) und einen Ventilsitz (16) bereitstellt, wobei der Ventileinlass (12) und der Ventilauslass (13) in wenigstens ein Rohr der Hydronikanlage verbindbar sind;
einen Ventilstößel (17), der mit dem Ventilsitz (16) zusammenwirkt, wobei das Steuerventil geschlossen ist, wenn der Ventilstößel (17) gegen den Ventilsitz (16) gepresst ist, und wobei das Steuerventil geöffnet ist, wenn der Ventilstößel (17) vom Ventilsitz (16) abgehoben ist;
ein Handrad (24) zum manuellen Verstellen der relativen Position des Ventilstößels (17) bezüglich des Ventilsitzes (16) durch Drehen oder Bewirken einer Rotation des Handrades (24), wobei das Handrad (24) seinen Abstand bezüglich eines feststehenden Teils (25) des Steuerventils ändert, wenn das Handrad (24) gedreht wird;
Druckprüfventile (15), die dem Ventilgehäuse (11) zugeordnet sind, zum Messen des Drucks innerhalb des Ventileinlasses (12) und zum Messen des Drucks innerhalb des Ventilauslasses (13) des Ventilgehäuses (11), wobei die Druckprüfventile (15) mit dem Ventilgehäuse (11) über Verbindungsanschlüsse (14) verbunden sind;
wobei der feststehende Teil (25) des Steuerventils einen Abschnitt (26) zum Aufnehmen eines Sensors (27) umfasst, der dafür ausgelegt ist, den Abstand zwischen dem Handrad (24) und dem feststehenden Teil (25) des Steuerventils und dadurch die relative Position des Ventilstößels (17) bezüglich des Ventilsitzes (16) zu messen;
wobei das Steuerventil ein Datenmittel (28) umfasst, das dafür ausgelegt ist, einen kᵥ-Wert des Steuerventils für jede relative Position des Ventilstößels (17) bezüglich des Ventilsitzes (16) bereitzustellen, so dass eine Durchflussrate eines hydronischen Mediums durch das Steuerventil automatisch aus einer Druckdifferenz zwischen dem Druck innerhalb des Ventileinlasses (12) und dem Druck innerhalb des Ventilauslasses (13), die von den Druckprüfventilen (15) bereitgestellt werden, aus der relativen Position des Ventilstößels (17) bezüglich des Ventilsitzes (16), der vom Sensor (27) bereitgestellt wird, und aus dem jeweiligen kᵥ-Wert, welcher der relativen Position des Ventilstößels (17) bezüglich des Ventilsitzes (16) entspricht, bestimmt werden kann;
eine Messvorrichtung (29), die mit den Druckprüfventilen (15) des Steuerventils (10) und mit dem Sensor (27), der dafür ausgelegt ist, den Abstand zwischen dem Handrad (24) und dem feststehenden Teil (25) des Steuerventils (10) zu messen, verbindbar ist, wobei die Messvorrichtung (29) automatisch die Durchflussrate des hydronischen Mediums aus der Druckdifferenz zwischen dem Druck innerhalb des Ventileinlasses (12) und dem Druck innerhalb des Ventilauslasses (13), die von den Druckprüfventilen (15) bereitgestellt werden, aus der relativen Position des Ventilstößels (17) bezüglich des Ventilsitzes (16), der vom Sensor (27) bereitgestellt wird, und aus dem jeweiligen kᵥ-Wert, welcher der relativen Position des Ventilstößels (17) bezüglich des Ventilsitzes (16) entspricht, bestimmt.

2. System nach Anspruch 1, **dadurch gekennzeichnet, dass** die Messvorrichtung (29) dafür ausgelegt ist, Daten zu lesen oder zu empfangen, die vom Datenmittel (28) des Steuerventils bereitgestellt werden.

3. System nach Anspruch 1, **dadurch gekennzeichnet, dass** die Messvorrichtung (29) dafür ausgelegt ist, den kᵥ-Wert des Steuerventils für jede relative Position des Ventilstößels (17) bezüglich des Ventilsitzes (16) aus den Daten zu bestimmen, die von dem Datenmittel (28) des Steuerventils bereitgestellt werden.

4. System nach einem der Ansprüche 1 bis 3, **dadurch gekennzeichnet, dass** das Steuerventil ein doppeltwirkendes Ausgleichsventil ist.

5. System nach einem der Ansprüche 1 bis 4, **dadurch gekennzeichnet, dass** der Sensor (27), der dafür ausgelegt ist, den Abstand zwischen dem Handrad (24) und dem feststehenden Teil (25) des Steuerventils zu messen, ein Hall-Sensor ist.

6. System nach einem der Ansprüche 1 bis 5, **dadurch gekennzeichnet, dass** das Datenmittel (28), das dafür ausgelegt ist, den kᵥ-Wert des Steuerventils für jede relative Position des Ventilstößels (17) bezüglich des Ventilsitzes (16) bereitzustellen, ein Strichcode ist.

7. System nach einem der Ansprüche 1 bis 6, **dadurch gekennzeichnet, dass** das Datenmittel (28), das dafür ausgelegt ist, den kᵥ-Wert des Steuerventils für jede relative Position des Ventilstößels (17) bezüglich des Ventilsitzes (16) bereitzustellen, ein RFID-Etikett ist.

8. System nach einem der Ansprüche 1 bis 7, **dadurch gekennzeichnet, dass** das Datenmittel (28), das dafür ausgelegt ist, den kᵥ-Wert des Steuerventils für jede relative Position des Ventilstößels (17) bezüglich des Ventilsitzes (16) bereitzustellen, eine Zeichenkette aus Ziffern und/oder Buchstaben ist, die auf einen Ventileinsatz oder auf das Ventilgehäuse gedruckt ist.

9. Verfahren zum Messen einer Durchflussrate eines hydronischen Mediums durch ein Steuerventil für Hydronikanlagen, die folgenden Schritte umfassend:
Bereitstellen eines Steuerventils (10) für Hydronikanlagen, wobei das Steuerventil (10) umfasst:
ein Ventilgehäuse (11), das einen Ventileinlass (12), einen Ventilauslass (13) und einen Ventilsitz (16) bereitstellt, wobei der Ventileinlass (12) und der Ventilauslass (13) in wenigstens ein Rohr der Hydronikanlage verbindbar sind;
einen Ventilstößel (17), der mit dem Ventilsitz (16) zusammenwirkt, wobei das Steuerventil geschlossen ist, wenn der Ventilstößel (17) gegen den Ventilsitz (16) gepresst ist, und wobei das Steuerventil geöffnet ist, wenn der Ventilstößel (17) vom Ventilsitz (16) abgehoben ist;
ein Handrad (24) zum manuellen Verstellen der relativen Position des Ventilstößels (17) bezüglich des Ventilsitzes (16) durch Drehen oder Bewirken einer Rotation des Handrades (24), wobei das Handrad (24) seinen Abstand bezüglich eines feststehenden Teils (25) des Steuerventils ändert, wenn das Handrad (24) gedreht wird;
Druckprüfventile (15), die dem Ventilgehäuse (11) zugeordnet sind, zum Messen des Drucks innerhalb des Ventileinlasses (12) und zum Messen des Drucks innerhalb des Ventilauslasses (13) des Ventilgehäuses (11), wobei die Druckprüfventile (15) mit dem Ventilgehäuse (11) über Verbindungsanschlüsse (14) verbunden sind;
wobei der feststehende Teil (25) des Steuerventils einen Abschnitt (26) zum Aufnehmen eines Sensors (27) umfasst, der dafür ausgelegt ist, den Abstand zwischen dem Handrad (24) und dem feststehenden Teil (25) des Steuerventils und dadurch die relative Position des Ventilstößels (17) bezüglich des Ventilsitzes (16) zu messen;
wobei das Steuerventil ein Datenmittel (28) umfasst, das dafür ausgelegt ist, einen kᵥ-Wert des Steuerventils für jede relative Position des Ventilstößels (17) bezüglich des Ventilsitzes (16) bereitzustellen, so dass eine Durchflussrate eines hydronischen Mediums durch das Steuerventil automatisch aus einer Druckdifferenz zwischen dem Druck innerhalb des Ventileinlasses (12) und dem Druck innerhalb des Ventilauslasses (13), die von den Druckprüfventilen (15) bereitgestellt werden, aus der relativen Position des Ventilstößels (17) bezüglich des Ventilsitzes (16), der vom Sensor (27) bereitgestellt wird, und aus dem jeweiligen kᵥ-Wert, welcher der relativen Position des Ventilstößels (17) bezüglich des Ventilsitzes (16) entspricht, bestimmt werden kann;
Verbinden der Druckprüfventile (15) des Steuerventils (10) und des Sensors (27), der dafür ausgelegt ist, den Abstand zwischen dem Handrad (24) und dem feststehenden Teil (25) des Steuerventils (10) zu messen, mit einer Messvorrichtung (29);
automatisches Bestimmen der Durchflussrate des hydronischen Mediums aus der Druckdifferenz zwischen dem Druck innerhalb des Ventileinlasses (12) und dem Druck innerhalb des Ventilauslasses (13), die von den Druckprüfventilen (15) bereitgestellt werden, aus der relativen Position des Ventilstößels (17) bezüglich des Ventilsitzes (16), der vom Sensor (27) bereitgestellt wird, und aus dem jeweiligen kᵥ-Wert, welcher der relativen Position des Ventilstößels (17) bezüglich des Ventilsitzes (16) entspricht.

## Revendications

1. Système de mesure un débit d'écoulement d'un milieu hydronique par le biais d'une vanne de commande d'installations hydroniques, comprenant:
une vanne de commande (10) d'installations hydroniques, la vanne de commande (10) comprenant:
un boîtier de vanne (11) fournissant un entrée de vanne (12), un sortie de vanne (13) et un siège de vanne (16), l'entrée de vanne (12) et la sortie de vanne (13) pouvant être raccordées dans au moins un tuyau de l'installation hydronique;
un piston de vanne (17) agissant ensemble avec le siège de vanne (16), dans lequel la vanne de commande est fermée quand le piston de vanne (17) est pressé contre le siège de vanne (16), et dans lequel la vanne de commande est ouverte quand le piston de vanne (17) est soulevé du siège de vanne (16) ;
un volant (24) pour ajuster manuellement la position relative du piston de vanne (17) par rapport au siège de vanne (16) en faisant tourner ou mettant en rotation le volant (24), le volant (24) changeant sa distance par rapport à une pièce statique (25) de la vanne de commande quand le volant (24) est tourné;
des vannes de test de pression (15) assignées au boîtier de vanne (11) pour mesurer la pression à l'intérieur de l'entrée de vanne (12) et pour mesurer la pression à l'intérieur de la sortie de vanne (13) du boîtier de vanne (11), dans lequel les vannes de test de pression (15) sont raccordées au boîtier de vanne (11) par le biais de bornes de raccordement (14);
dans lequel la pièce statique (25) de la vanne de commande comprend une section (26) destinée à recevoir un capteur (27) adapté pour mesurer la distance entre le volant (24) et la pièce statique (25) de la vanne de commande et ainsi la position relative du piston de vanne (17) par rapport au siège de vanne (16);
dans lequel la vanne de commande comprend un moyen de données (28) adapté pour fournir une valeur kᵥ de la vanne de commande pour chaque position relative du piston de vanne (17) par rapport au siège de vanne (16) de telle sorte qu'un débit d'écoulement d'un milieu hydronique à travers la vanne de commande puisse être déterminé automatiquement à partir d'une différence de pression entre la pression à l'intérieur de l'entrée de vanne (12) et la pression à l'intérieur de la sortie de vanne (13) fournies par les vannes de test de pression (15), à partir de la position relative du piston de vanne (17) par rapport au siège de vanne (16) fournie par le capteur (27) et à partir de la valeur kᵥ correspondant à la position relative du piston de vanne (17) par rapport au siège de vanne (16);
un dispositif de mesure (29) pouvant être raccordé aux vannes de test de pression (15) de la vanne de commande (10) et au capteur (27) adapté pour mesurer la distance entre le volant (24) et la pièce statique (25) de la vanne de commande (10), dans lequel le dispositif de mesure (29) détermine automatiquement le débit d'écoulement du milieu hydronique à partir de la différence de pression entre la pression à l'intérieur de l'entrée de vanne (12) et la pression à l'intérieur de la sortie de vanne (13) fournies par les vannes de test de pression (15), à partir de la position relative du piston de vanne (17) par rapport au siège de vanne (16) fournie par le capteur (27) et à partir de la valeur kᵥ respective correspondant à la position relative du piston de vanne (17) par rapport au siège de vanne (16).

2. Système selon la revendication 1, **caractérisé en ce que** le dispositif de mesure (29) est adapté pour lire ou recevoir des données fournies par le moyen de données (28) de la vanne de commande.

3. Système selon la revendication 1, **caractérisé en ce que** le dispositif de mesure (29) est adapté pour déterminer la valeur kᵥ de la vanne de commande pour chaque position relative du piston de vanne (17) par rapport au siège de vanne (16) à partir des données fournies par le moyen de données (28) de la vanne de commande.

4. Système selon l'une des revendications 1 à 3, **caractérisé en ce que** la vanne de commande est une vanne d'équilibrage de régulation double.

5. Système selon l'une des revendications 1 à 4, **caractérisé en ce que** le capteur (27) adapté pour mesurer la distance entre le volant (24) et la pièce statique (25) de la vanne de commande est un capteur Hall.

6. Système selon l'une des revendications 1 à 5, **caractérisé en ce que** le moyen de données (28) adapté pour fournir la valeur kᵥ de la vanne de commande pour chaque position relative du piston de vanne (17) par rapport au siège de vanne (16) est un code barres.

7. Système selon l'une des revendications 1 à 6, **caractérisé en ce que** le moyen de données (28) adapté pour fournir la valeur kᵥ de la vanne de commande pour chaque position relative du piston de vanne (17) par rapport au siège de vanne (16) est une étiquette RFID.

8. Système selon l'une des revendications 1 à 7, **caractérisé en ce que** le moyen de données (28) adapté pour fournir la valeur kᵥ de la vanne de commande pour chaque position relative du piston de vanne (17) par rapport au siège de vanne (16) est une chaîne de numéros et/ou de caractères imprimée sur un insert de vanne ou sur le boîtier de vanne.

9. Procédé de mesure un débit d'écoulement d'un milieu hydronique par le biais d'une vanne de commande d'installations hydroniques, comprenant les étapes suivantes:
la fourniture d'une vanne de commande (10) d'installations hydroniques, la vanne de commande (10) comprenant:
un boîtier de vanne (11) fournissant un entrée de vanne (12), un sortie de vanne (13) et un siège de vanne (16), l'entrée de vanne (12) et la sortie de vanne (13) pouvant être raccordées dans au moins un tuyau de l'installation hydronique;
un piston de vanne (17) agissant ensemble avec le siège de vanne (16), dans lequel la vanne de commande est fermée quand le piston de vanne (17) est pressé contre le siège de vanne (16), et dans lequel la vanne de commande est ouverte quand le piston de vanne (17) est soulevé du siège de vanne (16) ;
un volant (24) pour ajuster manuellement la position relative du piston de vanne (17) par rapport au siège de vanne (16) en faisant tourner ou mettant en rotation le volant (24), le volant (24) changeant sa distance par rapport à une pièce statique (25) de la vanne de commande quand le volant (24) est tourné;
des vannes de test de pression (15) assignées au boîtier de vanne (11) pour mesurer la pression à l'intérieur de l'entrée de vanne (12) et pour mesurer la pression à l'intérieur de la sortie de vanne (13) du boîtier de vanne (11), dans lequel les vannes de test de pression (15) sont raccordées au boîtier de vanne (11) par le biais de bornes de raccordement (14);
dans lequel la pièce statique (25) de la vanne de commande comprend une section (26) destinée à recevoir un capteur (27) adapté pour mesurer la distance entre le volant (24) et la pièce statique (25) de la vanne de commande et ainsi la position relative du piston de vanne (17) par rapport au siège de vanne (16);
dans lequel la vanne de commande comprend un moyen de données (28) adapté pour fournir une valeur kᵥ de la vanne de commande pour chaque position relative du piston de vanne (17) par rapport au siège de vanne (16) de telle sorte qu'un débit d'écoulement d'un milieu hydronique à travers la vanne de commande puisse être déterminé automatiquement à partir d'une différence de pression entre la pression à l'intérieur de l'entrée de vanne (12) et la pression à l'intérieur de la sortie de vanne (13) fournies par les vannes de test de pression (15), à partir de la position relative du piston de vanne (17) par rapport au siège de vanne (16) fournie par le capteur (27) et à partir de la valeur kᵥ correspondant à la position relative du piston de vanne (17) par rapport au siège de vanne (16);
le raccordement des vannes de test de pression (15) de la vanne de commande (10) et du capteur (27) adapté pour mesurer la distance entre le volant (24) et la pièce statique (25) de la vanne de commande (10) à un dispositif de mesure (29); la détermination automatique du débit d'écoulement du milieu hydronique à partir de la différence de pression entre la pression à l'intérieur de l'entrée de vanne (12) et la pression à l'intérieur de la sortie de vanne (13) fournies par les vannes de test de pression (15), à partir de la position relative du piston de vanne (17) par rapport au siège de vanne (16) fournie par le capteur (27) et à partir de la valeur kᵥ respective correspondant à la position relative du piston de vanne (17) par rapport au siège de vanne (16).
